Europäisches Patentamt

European Patent Office

Office européen des brevets

(11) Veröffentlichungsnummer: **0 208 115**
**A1**

## (12) EUROPÄISCHE PATENTANMELDUNG

(21) Anmeldenummer: 86107217.1

(22) Anmeldetag: 28.05.86

(51) Int. Cl.⁴: **F 16 H 39/46**
**B 60 K 41/26**

(30) Priorität: 03.06.85 US 740931

(43) Veröffentlichungstag der Anmeldung:
14.01.87 Patentblatt 87/3

(84) Benannte Vertragsstaaten:
DE FR GB

(71) Anmelder: DEERE & COMPANY
1 John Deere Road
Moline Illinois 61265(US)

(72) Erfinder: King, Michael Joseph
1860 N. Main
Dubuque Iowa 52001(US)

(74) Vertreter: Feldmann, Bernhard et al,
DEERE & COMPANY European Office, Patent Department
Steubenstrasse 36-42 Postfach 503
D-6800 Mannheim 1(DE)

(54) Schaltvorrichtung für ein hydrostatisches Getriebe, insbesondere für Kraftfahrzeuge.

(57) Schaltvorrichtung für ein hydrostatisches Getriebe, insbesondere für Kraftfahrzeuge, dessen Drehrichtung umkehrbar und das über einen Schalthebel (23) schaltbar ist, der in seiner Neutralstellung um eine erste Achse (91) schwenkbar und beim Verschwenken um die erste Achse (91) wahlweise in eins von zwei den beiden Drehrichtungen zugeordnetes und um eine zweite Achse (37) drehbares Schwenkteil (61, 65) eingreift und der um eine dritte, zur ersten Achse (91) im rechten Winkel und zur zweiten Achse (37) parallel angeordnete Achse schwenkbar ist und beim Verschwenken um die dritte Achse die Schwenkteile (61, 65) verdreht, wobei die zweite und dritte Achse koaxial angeordnet sind.

FIG. 1

**0208115**

Schaltvorrichtung für ein hydrostatisches Getriebe,
insbesondere für Kraftfahrzeuge

---

Die Erfindung bezieht sich auf eine Schaltvorrichtung für
ein hydrostatisches Getriebe, insbesondere für Kraftfahrzeuge, dessen Drehrichtung umkehrbar und das über einen
Schalthebel schaltbar ist, der in seiner Neutralstellung
um eine erste Achse schwenkbar und beim Verschwenken um die
erste Achse wahlweise in eins von zwei, den beiden Drehrichtungen zugeordnetes und um eine zweite Achse schwenkbares Schwenkteil eingreift, und der um eine dritte zur
ersten Achse im rechten Winkel und zur zweiten Achse parallel angeordnete Achse schwenkbar ist und beim Verschwenken um die dritte Achse die Schwenkteile verdreht.

Bei dieser Schaltvorrichtung (US-A-4 346 618) ist der
Schalthebel über einen ein Kreuzgelenk aufweisenden Zapfen
an einer Gehäusewand gelagert, so daß der Schalthebel beim
Verschwenken der Schwenkteile um eine andere Achse schwenkt,
als die Schwenkteile selbst. Hierdurch bleibt der Schwenkhebel nur auf einem kleinen Teil seines Schwenkbereiches mit
den Schwenkteilen im Eingriff, wodurch der Schaltweg für das
hydrostatische Getriebe bzw. das diesem vorgeschaltete Ventil äußerst gering ist.

Die mit der Erfindung zu lösende Aufgabe wird darin gesehen,
einen relativ langen Schaltweg zu erhalten, wodurch eine
bessere Dosierung stattfinden kann, die sich besonders dann
vorteilhaft auswirkt, wenn nicht nur die Drehrichtung des
hydrostatischen Getriebes geändert wird, sondern auch seine
Drehzahl.

Diese Aufgabe ist nach der Erfindung dadurch gelöst worden,
daß die zweite und dritte Achse koaxial angeordnet sind, so
daß der Schalthebel und die Schwenkteile um die gleiche
Achse verschwenkbar sind, das heißt, der Schwenkhebel bleibt mit den Schwenkteilen während der Schwenkbewegung immer im Eingriff und die Schwenkbewegung selbst kann beliebig lang ausgebildet sein.

Zweckmäßig sind nach einem weiteren Vorschlag der Erfindung die zweite und die dritte Achse miteinander verbunden, das heißt, Schwenkhebel und Schwenkteile sind auf derselben Achse angeordnet.

Damit in einfacher Weise der Schalthebel um dieselbe Achse wie die Schwenkteile verschwenkbar ist, kann auf der dritten oder zweiten Achse oder der gemeinsamen Achse ein dritter Schwenkteil gelagert sein, an dessen einem Ende die erste Achse angeordnet ist. Hierbei ist die erste Achse so hoch über dem Schwenkteil anzuordnen, daß der Schaltfinger des Schalthebels leicht in die Schwenkteile eingreifen kann, woraus folgt, daß bei Verschwenken um die erste Achse der Schalthebel mit einem der beiden Schwenkteile in Eingriff bringbar ist und beim Verschwenken um die gemeinsame Achse der erste und zweite Schwenkteil ebenso wie der dritte Schwenkteil und damit der Schalthebel einen gleichen Schwenkbereich durcheilen.

Daß beim Verschwenken um die erste Achse eine Verschwenkung um die zweite und dritte Achse ausgeschlossen wird, bzw. daß beim Verschwenken um die zweite und die dritte Achse ein Verschwenken um die erste Achse unmöglich ist, wird durch eine entsprechend geformte Schaltschablone ermöglicht. Diese weißt in der Regel zwei parallel zueinander angeordnete Schaltgassen auf, die durch eine rechtwinklig zu diesen verlaufende dritte Schaltgasse miteinander verbunden sind, wobei letztere der Neutralstellung, das heißt, der Verschwenkung um die erste Achse, wenn der Schalthebel von einem Schwenkteil zum anderen überwechselt, zugeordnet ist. U-förmig ausgebildete Schaltschablonen finden häufig bei mechanischen Getrieben Verwendung und, damit das Schalten der Bedienungsperson beim Wechseln von einem Fahrzeug mit einem mechanischen Getriebe auf ein Fahrzeug mit einem hydrostatischen Getriebe erleichtert werden soll, bietet es
sich an, auch der Schaltvorrichtung für ein hydrostatisches
Getriebe eine U-förmig ausgebildete Schaltschablone zuzuordnen, wobei dann nach der Erfindung der dritte Schwenkteil
zur Aufnahme der ersten Achse mindestens ein Lagerauge aufweisen kann, in dem der Schalthebel um die erste Achse
verschwenkbar gelagert ist. Zweckmäßig weißt der dritte
Schaltteil dabei parallel zueinander abstehende Lageraugen
auf, in denen die erste Achse endseitig aufgenommen ist.

Besonders vorteilhaft muß angesehen werden, wenn das hydrostatische Getriebe, das dann in einem Fahrzeug eingebaut ist,
beim Betätigen der Fahrzeugbremse in seine Neutralstellung
zurückgeführt wird, oder daß zumindest Vorrichtungen vorgesehen sind, über die die Drehzahl des hydrostatischen
Getriebes dann bei Betätigung der Fahrzeugbremse verringert
werden kann. Hierzu wird nach der Erfindung vorgeschlagen,
daß der dritte Schwenkteil bei Betätigung einer Bremse in
seine der Neutralstellung des Schalthebels entsprechende
Ausgangsstellung über ein Gestänge rückführbar ist. Hierzu
ist in konstruktiv einfacher Weise der dritte Schwenkteil
mit einem Ansatz versehen, gegen den ein Arm zur Anlage
bringbar ist, der schwenkbar gelagert und über die Bremse
bzw. deren Gestänge betätigbar ist. Dies wiederum bewirkt,
daß bei Betätigung der Bremse das Gestänge gegen den Ansatz
zur Anlage fahren kann, wodurch der entsprechende Schwenkteil in Richtung auf seine Ausgangsstellung oder in seine
Ausgangsstellung zurückgeführt wird, das heißt, der Schalthebel läuft so zwangsläufig zurück in Richtung auf seine
Neutralstellung, wobei die Drehzahl bzw. die Geschwindigkeit
des Fahrzeuges kontinuierlich vermindert wird, bis daß der
Schalthebel in seine Neutralstellung zurückgeführt ist.

Im einzelnen kann der dritte Schwenkteil mit einer auf der
dritten oder zweiten Achse gelagerten Hülse verbunden sein,
die wiederum an einem vierten Schwenkteil angeschlossen ist,
wobei auf der Hülse zwischen dem dritten und vierten Schwenkteil der erste und zweite Schwenkteil drehbar angeordnet sind, wodurch sich eine sehr kompakte Bauweise ergibt. Hierbei sind der dritte und vierte Schwenkteil mit der Hülse über mindestens einen Stift miteinander verbunden.

Bei der bekannten Schaltvorrichtung weisen die ersten und zweiten Schwenkteile Nasen, in die ein Schaltfinger des Schalthebels eingreifen kann, und Anschlußstellen für Schaltarme auf, so daß beim Eingriff des Schaltfingers in ein Schwenkteil der entsprechende Schwenkteil verschwenkt werden kann, der dann über die entsprechende Anschlußstelle und den dort vorgesehen Schaltarm das hydrostatische Getriebe für eine Drehrichtung und eine bestimmte Drehzahl verstellt. Bei der Schaltvorrichtung nach der Erfindung sind diese Anschlußstellen an je einem Ansatz vorgesehen, die zu den Nasen im rechten oder etwa rechten Winkel angeordnet sind und sich in entgegengesetzte Richtungen erstrecken, so daß die Schwenkteile bei Betätigung über den Schalthebel immer in der gleichen Drehrichtung umlaufen, wobei diese Drehrichtung auch der Drehrichtung des Schalthebels entspricht. Zweckmäßig können dabei alle Schwenkteile als Scheiben ausgebildet sein, wobei noch hinzu kommt, daß die Schwenkteile unter einer Federbelastung stehen, so daß sie stets gegeneinander gedrückt werden. Dies wird nach der Erfindung im ganzen dadurch erreicht, daß die dritte und zweite Achse aus einem in einem gehäusefesten Teil einsetzbaren Zapfen bestehen, der endseitig eine aufschraubbare Mutter aufnimmt, die über eine Feder gegen eine Ausgleichsplatte anliegt, wobei zwischen Ausgleichsplatte und viertem Schwenkteil und zwischen gehäusefestem Teil und drittem Schwenkteil je ein Drucklager vorgesehen ist.

Eine derartige Schaltvorrichtung läßt sich nach der Erfindung in einfacher Weise dadurch erweitern, daß koaxial zur dritten und zweiten Achse im gehäusefesten Teil ein weiterer Zapfen eingesetzt ist, der einen Betätigungshebel aufnimmt, der ebenfalls federbelastet ist. Über diesen Betätigungshebel können weitere Schaltvorgänge vorgenommen werden. Bei einer derartigen Erweiterung ist nach der Erfindung vorgesehen, daß die Ausgleichsplatte über eine Ausgleichsschraube mit einer weiteren Ausgleichsplatte verbunden ist, die auf dem weiteren Zapfen angeordnet ist, wobei zwischen der weiteren Ausgleichsplatte und dem Betätigungshebel und zwischen dem gehäusefesten Teil und dem Betätigungshebel je ein Drucklager vorgesehen ist und auf das freie Ende des weiteren Zapfens eine Mutter aufschraubbar ist, die über eine Feder gegen die weitere Ausgleichsplatte drückt, so daß die gesamte Schaltvorrichtung ein Minimum von Platzbedarf benötigt und somit äußerst kompakt und leicht einbaubar ausgestaltet ist.

In der Zeichnung ist ein nachfolgend näher erläutertes Ausführungsbeispiel der Erfindung dargestellt, es zeigt:

Fig. 1    die erfindungsgemäße Schaltvorrichtung im Schnitt,

Fig. 2    eine Schaltkonsole in der Draufsicht,

Fig. 3    die Schwenkteile in der Neutralstellung,

Fig. 4a   die Schwenkteile in einer Stellung, die der der Vorwärtsfahrt des hydrostatischen Getriebes zugeordneten Drehrichtung entsprechen,

Fig. 4b   die Schwenkteile in einer Stellung, die der Rückwärtsfahrt des hydrostatischen Getriebes zugeordneten Drehrichtung entsprechen,

Fig. 5    ein Schwenkteil in seiner der Neutralstellung zugeordneten Ausgangsstellung mit entsprechendem Rückführgestänge.

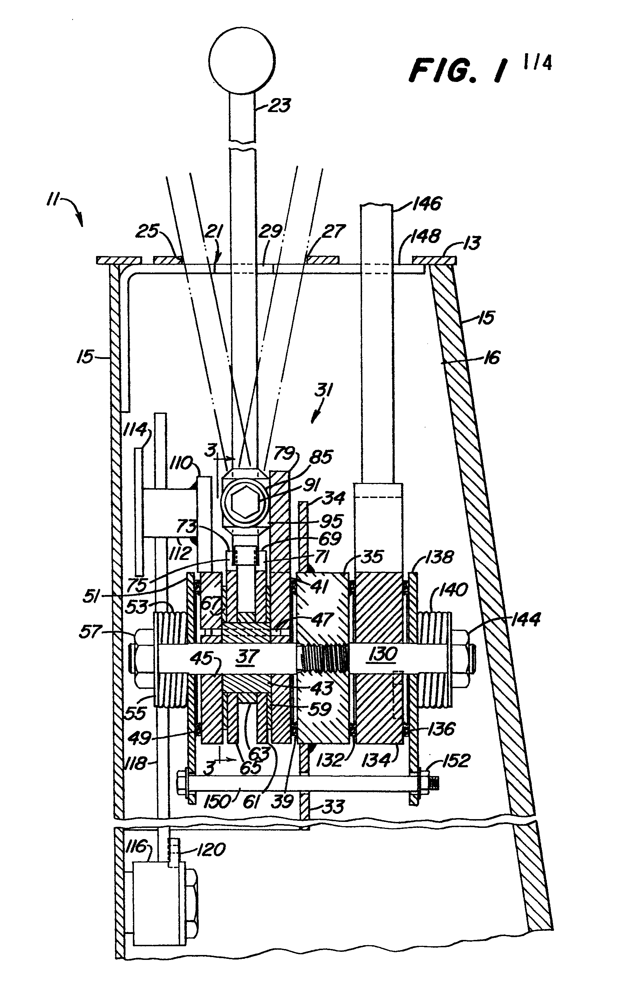

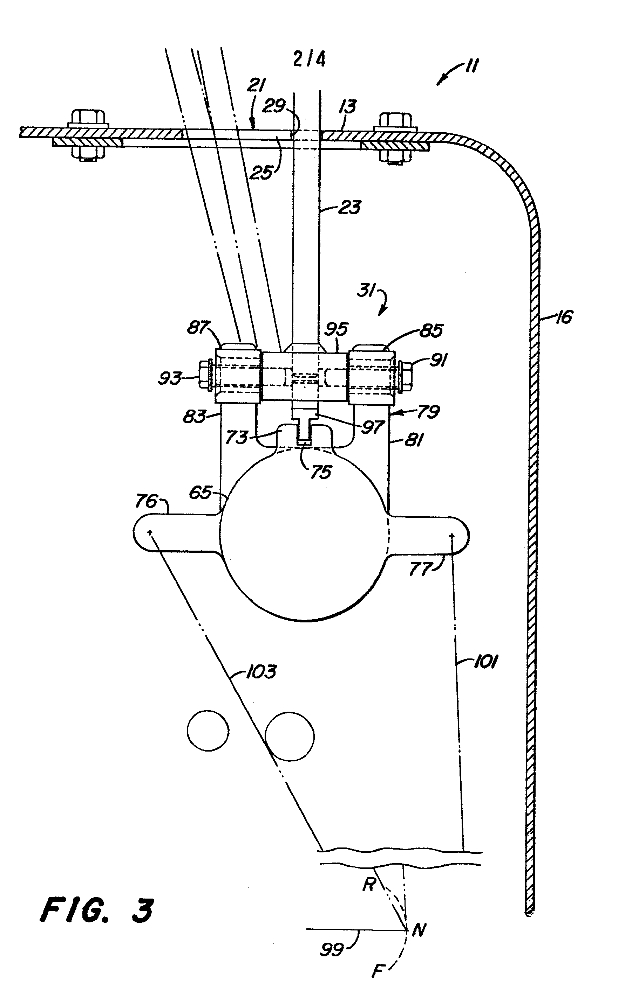

In den Fig. 1 und 2 ist mit 11 eine Konsole an einem Fahrerstand eines herkömmlichen Arbeitsfahrzeuges bezeichnet, das
ein in der Zeichnung der Einfachheit halber nicht dargestelltes hydrostatisches Getriebe aufweist. Im einzelnen besteht
die Konsole 11 aus einem Gehäuse mit einer Oberseite 13 und
dieses seitlich abschließenden Seitenwänden 15 und 16. In
die Oberseite 13 ist eine im wesentlichen U-förmig ausgebildete Schaltschablone 21 eingearbeitet, durch die sich ein
Schalthebel 23 erstreckt.

Damit hat die Schaltschablone einen U-förmigen Schaltweg,
wobei ein erster Schenkel mit 25, ein dazu parallel verlaufender Schenkel mit 27 und ein Steg mit 29 bezeichnet sind,
wobei der Steg in die beiden Schenkel übergeht und zu diesen
senkrecht angeordnet ist. Der Schalthebel 23 kann in dieser
Schaltgasse wahlweise verstellt werden, wobei der Schenkel
25 einer Drehrichtung des hydrostatischen Getriebes zugeordnet ist, die beim Einsatz in einem Fahrzeug die Vorwärtsfahrt ergibt. Wird der Schalthebel 23 dann von dem Steg 29
aus in dem Schenkel 25 weiter nach oben verstellt, so
vergrößert sich die Drehzahl und damit die Fahrgeschwindigkeit. Befindet sich der Schalthebel 29 in der Schaltgasse,
die durch den Schenkel 27 gebildet ist, so wird die Drehrichtung des hydrostatischen Getriebes umgekehrt, d.h. beim
Einsatz des hydrostatischen Getriebes in einem Kraftfahrzeug
wird die Drehrichtung umgekehrt, so daß dann das Kraftfahrzeug rückwärts gefahren werden kann. Auch hier wird, wenn
sich der Schalthebel von dem Steg 29 weiter entfernt, die
Drehrichtung und damit die Fahrgeschwindigkeit vergrößert.
Wird der Schalthebel nur in der Schaltgasse, die dem Steg 29
entspricht, verschoben, so verbleibt das hydrostatische Getriebe in seiner Neutralstellung, in der keine Ausgangsdrehzahl erzielbar ist.

Durch unmittelbare Betätigung des Schalthebels 29 kann damit
das hydrostatische Getriebe geschaltet werden, wozu im

0208115

einzelnen eine in den Fig. 1 und 3 dargestellte Schaltvorrichtung 31, zu der auch der Schalthebel 23 gehört, vorgesehen ist. Im einzelnen weist die Schaltvorrichtung 31 ein
Stützlager 33 auf, das mit einer der Seitenwände, beispielsweise der Seitenwand 16 durch herkömmliche Mittel, wie
Schweißen fest verbunden ist und hierzu einen vertikal sich
erstreckenden freitragenden Teil 34 aufnimmt, an dem ein
Tragteil fest angeschlossen ist, das nachfolgend als gehäusefester Teil bezeichnet wird. In diesem gehäusefesten Teil 35
ist das eine Ende einer Achse 37, die als Zapfen ausgebildet
ist, derart eingeschraubt, daß sie sich von dem gehäusefesten
Teil 35 freitragend nach außen und horizontal erstreckt. Auf
dieser Achse sind mit Bezug auf Fig. 1 von rechts nach links
fortschreitend drehbar ein erstes Drucklager 39, das gegen
die linke Seite des gehäusefesten Teils 35 anliegt, eine
nachfolgend als dritter Schwenkteil bezeichnete Scheibe 41,
eine Hülse 43 und ein nachfolgend als vierter Schwenkteil
bezeichnete Scheibe 45 gelagert. Hierbei werden der dritte
und vierte Schwenkteil 41 und 45 über die Hülse 43 auf
Abstand gehalten. Über in entsprechende Bohrungen in dem
dritten und vierten Schwenkteil und der Hülse einsetzbare
Stifte 47 wird sichergestellt, daß sich der dritte und
vierte Schwenkteil 41 und 45 und die Hülse 43 gemeinsam um
die Achse 37 drehen lassen. An den vierten Schwenkteil 45
schließt sich dann ein weiterer Druckring 49 an, gegen den
eine Ausgleichsplatte 51 anliegt, die wiederum über eine
Feder 53 in Richtung auf den vierten Schwenkteil 45 über
eine auf die Achse 37 endseitig aufschraubbare Mutter 57
gedrückt wird. Zwischen der Feder 53 und der Mutter 57 ist
noch eine Unterlegscheibe 55 vorgesehen. Damit kann die
Feder 53 immer auf Spannung gehalten werden.

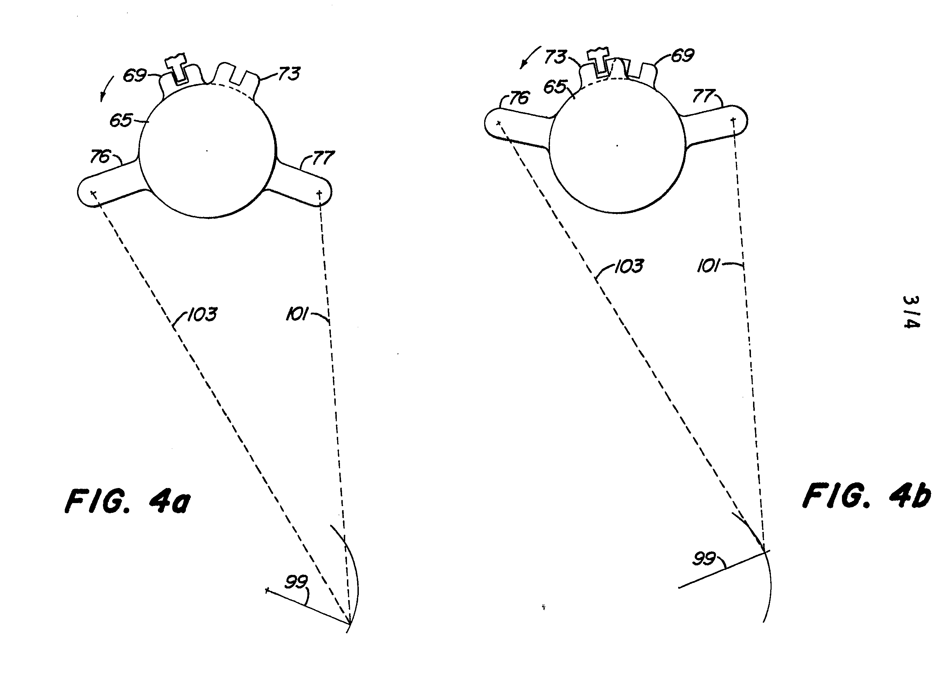

Wie aus Fig. 1 hervorgeht, so sind auf der Hülse 43, ebenfalls wiederum von rechts nach links, ein Distanzhalter 59,
eine Steuerscheibe 61 für Vorwärtsfahrt, die nachfolgend als
erstes Schwenkteil bezeichnet ist, ein zweiter Distanzhalter
63, eine Steuerscheibe 65 für Rückwärtsfahrt, die nachfolgend als zweites Schwenkteil bezeichnet ist und eine dritte
Distanzscheibe 67 angeordnet. Über den Distanzhalter 63
werden der erste und zweite Schwenkteil 61 und 65 auf einen
entsprechenden Abstand gehalten, wobei es gleichermaßen
möglich ist, daß der Distanzhalter mit einem der Schwenkteile fest verbunden ist. Die ersten und zweiten Schwenkteile
61 und 65 können aber auch unmittelbar auf der Achse 37 oder
auf einer zu dieser Achse koaxial angeordneten gelagert sein.
Wie insbesondere aus den Fig. 1 und 4 hervorgeht, so ist der
erste Schwenkteil 61 mit einer radial angeformten Nase 69
versehen, in die ein nach außen offener Radialschlitz 71
eingearbeitet ist. In gleicher Weise ist der zweite Schwenkteil 65 zu seinem Verschwenken mit einer radial angeformten
Nase 73 versehen, in die ebenfalls ein Radialschlitz 75
eingearbeitet ist. Die Schwenkteile 61 und 65 sind ferner
mit sich radial nach außen erstreckenden Ansätzen 76 und 77
versehen, die mit Bezug auf die zugehörigen Nasen 73 und 69
in einem rechten Winkel angeordnet sind und sich in gegenüberliegende Richtungen erstrecken.

Aus den Fig. 1 und 3 geht hervor, daß eine direkte Verbindung zwischen dem Schalthebel 23 und der restlichen Schaltvorrichtung 31 über den dritten Schwenkteil 41 erreicht
wird. Hierzu weist der dritte Schwenkteil einen radial nach
außen gerichteten Bügel 79 mit Schenkeln 81 und 83 auf, an
denen Lageraugen 85 und 87 angeformt sind. Axial durch diese
Lageraugen 85 und 87 erstrecken sich Stiftschrauben 91 und
93, die bis in einen Tragblock 95 derart geführt sind, daß
der Tragblock 95 zwischen den Lageraugen 85 und 87 schwenkbar aufgenommen ist. Dabei kann in einfacher Weise die Führung derart sein, daß der Tragblock 95 auf den Stiftschrauben 91 und 93 drehbar angeordnet ist. Die Gesamtanordnung
des Tragblockes 95 ist derart, daß seine Schwenkachse sich
in einem rechten Winkel zu der Schwenkachse des dritten
Schwenkteiles 41, d.h. zur Achse 37 erstreckt. Mit dem Tragblock ist der Schalthebel 23 fest verbunden, der einen sich
koaxial zu ihm erstreckenden Schaltfinger 97 aufweist, der seinerseits wiederum mit dem Tragblock 95 an der dem Schalthebel 23 gegenüberliegenden Seite fest verbunden ist. Der
Schaltfinger selbst weist eine Größe auf, daß er sich in der
Ausgangsstellung bzw. der Neutralstellung des ersten und
zweiten Schwenkteils 61 und 65 in deren Radialschlitzen 71
und 75 teilweise befindet und in einen der Radialschlitze
fest eingreift und den anderen freigibt, wenn der Schalthebel aus seiner in Fig. 2 dargestellten Stellung in dem
Steg 29 nach rechts oder nach links verschwenkt wird. Bei
einer Verschwenkung des Schalthebels mit Bezug auf Fig. 1
nach links um die Stiftschrauben 91 und 93 wird der Schaltfinger 97 in dem Radialschlitz 71 des ersten Schwenkteiles
61 fest aufgenommen und eine Schaltstellung für Vorwärtsfahrt einnehmen, während bei einer Schwenkbewegung des
Schalthebels nach rechts um die Stiftschrauben 91 und 93 ein
Eingriff des Schaltfingers 97 in dem Radialschlitz 95 des
zweiten Schwenkteiles 65 stattfindet, in dem eine Schaltstellung für eine umgekehrte Drehrichtung des hydrostatischen Getriebes gegeben ist.

Die Verstellung des hydrostatischen Getriebes erfolgt über
einen in den Fig. 3 und 4 schematisch dargestellten Steuerhebel 99, der mit dem ersten und zweiten Schwenkteil über
entsprechende Schaltarme 101 und 103 verbindbar ist. Im
einzelnen ist der Schaltarm 101 mit seinem einen Ende
schwenkbar an den Ansatz 77 des zweiten Schwenkteiles 65
und mit seinem anderen Ende über herkömmliche Mittel an dem
Steuerhebel 99 angeschlossen. In ähnlicher Weise ist der
Schaltarm 103 zwischen dem Ansatz 76 des ersten Schwenkteiles 61 und dem Steuerhebel 99 vorgesehen.

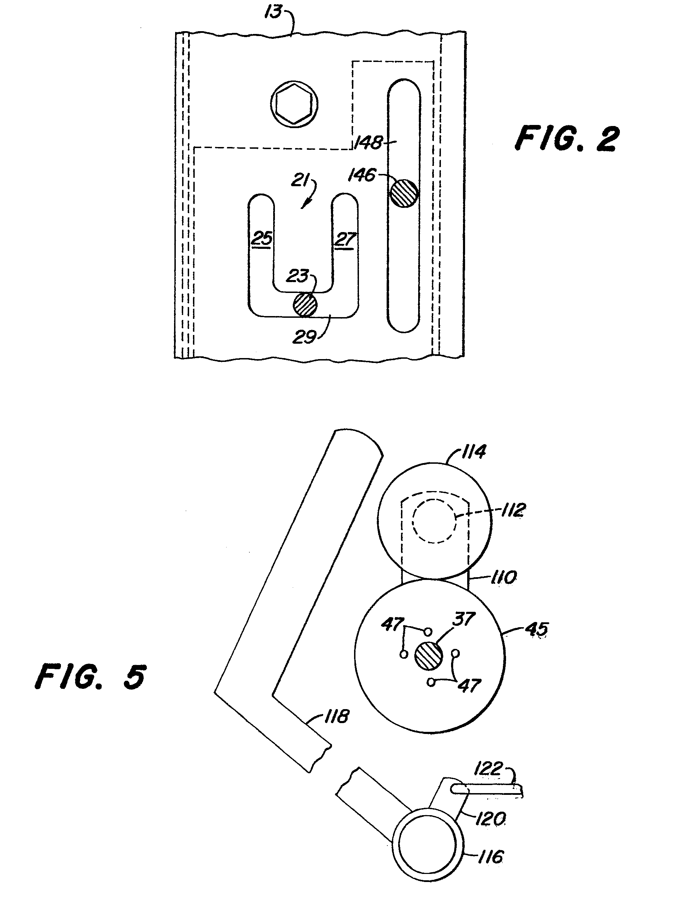

Aus den Fig. 1 und 5 ist ferner ersichtlich, daß die Schaltvorrichtung 31 noch mit einer Vorrichtung zusammenwirkt, die
bei einer vorgegebenen Bremstätigkeit derart wirkt, daß der
erste und zweite Schwenkteil 61 und 65 und damit auch der
Steuerhebel 23 in ihre Neutral- bzw. Ausgangsstellung oder
zumindest in deren Richtung zurückgeführt werden, und zwar unabhängig davon, ob das hydrostatische Getriebe eine Drehrichtung für Vorwärts- oder Rückwärtsfahrt einnimmt. In
einem solchen Fall wandert dann der Steuerhebel 23 in den
Schenkeln 25 und 27 automatisch in Richtung auf den Steg 29,
der der Neutralstellung entspricht, zu. Die Vorrichtung ist
im einzelnen so ausgelegt, daß, wenn die Bremse voll betätigt
wird, die Schaltvorrichtung 31 in ihre Neutralstellung zurückgefahren wird. Im einzelnen gehören zu dieser Rückführvorrichtung ein Ansatz 110, der mit dem vierten Schwenkteil
45 über herkömmliche Mittel derart fest verbunden ist, daß
er sich von diesem radial nach außen erstreckt. An diesen
ist ein sich axial erstreckender Ansatz 112, beispielsweise
in Form einer Hülse fest angeschlossen. Eine Ringscheibe 114
begrenzt das andere Ende des Ansatzes 112. Zu dem Rückführgestänge gehört ferner eine Kurbel 116, die drehbar mit
einer der Seitenwände 15 verbunden ist und einen Arm 118
derart aufnimmt, daß dieser sich bis in eine Position
erstreckt, in der er beim Verschwenken der Kurbel 116 gegen
den Ansatz 112 zur Anlage kommen kann. Das Verschwenken der
Kurbel 120 erfolgt über einen Hebel 122, der in entsprechender Weise mit dem Bremssystem des Fahrzeugs in Verbindung
steht. Selbstverständlich kann das Rückführgestänge, wenn
die Platzverhältnisse es erlauben, auch an dem dritten
Schwenkteil 41 direkt angreifen.

Die vorbeschriebene Schaltvorrichtung ist noch ergänzungsfähig, wie insbesondere aus Fig. 1 hervorgeht, aus der zu
erkennen ist, daß eine weitere Achse 130 in Form eines
Zapfens in den gehäusefesten Teil 35 derart eingeschraubt
ist, daß er sich zu der Achse 37 koaxial erstreckt und von
dem gehäusefesten Teil 35 aus gesehen in eine entgegengesetzte Richtung. Ein Drucklager 132 ist auf der Achse 130
derart angeordnet, daß es gegen den gehäusefesten Teil 35
auf dessen rechter Seite anliegt, woran sich eine Kurbelschwinge 134, die drehbar auf der Achse 130 angeordnet ist,
anschließt. Ein weiteres Drucklager 136 und eine zweite
Ausgleichplatte 138 sowie eine Feder 140 sind dann hintereinander auf der Achse 130 angeschlossen, wobei diese Einheit über eine der Feder nachfolgende Unterlegscheibe und eine auf die Achse 130 aufschraubbare Mutter auf letzterer gehalten werden und über die Feder auf Druck beansprucht ist. Von der Kurbelschwinge 134 aus erstreckt sich ein Betätigungshebel 146 durch einen weiteren Schlitz 148, der in die Oberseite 13 der Konsole 11 eingearbeitet ist. Bei diesem Betätigungshebel kann es sich um einen Gashebel handeln, der über ein nicht gezeigtes Gestänge mit dem Verbrennungsmotor des Fahrzeuges in Verbindung steht.

Damit die auf den Achsen 37 und 130 angeordneten Komponenten immer richtig zueinander ausgerichtet bleiben, ist eine Ausgleichschraube 150 vorgesehen, die sich durch die Ausgleichsplatten 51 und 138 sowie durch das Stützlager 33 erstreckt. Die Ausgleichsschraube 150 wird in ihrer eingestellten Position durch eine aufschraubbare Mutter 152 gehalten.

Nachfolgend wird kurz auf die Wirkungsweise der vorstehend beschriebenen Schaltvorrichtung 31 eingegangen. Um eine Schaltstellung für eine Drehrichtung, beispielsweise die der Vorwärtsfahrt zu erhalten, wird der Schalthebel 23 in der durch den Steg 29 gegebenen Schaltgasse um die Stiftschrauben 91 und 93 derart verschwenkt, daß er in der Verlängerung des Schenkels 25 zu liegen kommt. Bei dieser Schwenkbewegung wird der Schaltfinger 97 dann in den Radialschlitz 71 der Nase 69 am ersten Schwenkteil 61 eingreifen. Wird nun der Schalthebel 23 in der Schaltgasse 25 bewegt, dann wird der erste Schwenkteil 61 auf der Hülse 43 entgegen dem Uhrzeigerdrehsinn verschwenken, wodurch der Ansatz 76 den Schaltarm 103 derart verstellt, daß der Steuerhebel eine Position einnimmt, die einer Drehrichtung für Vorwärtsfahrt entspricht. Da beide Schaltarme 101 und 103 an dem Steuerhebel 99 angreifen, wird eine Verstellung des Steuerarmes 103 auch eine entsprechende Verstellung in synchroner Weise des Schaltarmes 101 bewirken, wodurch sich der zweite Schwenkteil 65 im Uhrzeigerdrehsinn auf der Hülse 43 bewegt. Um eine Schaltstellung zu erreichen, die einer Drehrichtung für Rückwärtsfahrt entspricht, wird der Schalthebel 23 um die Stiftschrauben 91 und 93 in dem der Neutralgasse entsprechenden Steg 29
derart verschwenkt, daß er in die Verlängerung des Schenkels
27 zu liegen kommt. Sobald er diese Stellung einnimmt, hat
der Schaltfinger 97 des Schalthebels 29 den Radialschlitz 71
des ersten Schwenkteiles 61 freigegeben und ist voll in den
Radialschlitz 75 in der Nase 73 des zweiten Schwenkteils 65
eingerastet. Ein weiteres Verstellen des Schalthebels 23 in
der dem Schenkel 27 entsprechenden Schaltgasse bewirkt ein
Verschwenken des zweiten Schwenkteils entgegen dem Uhrzeigerdrehsinn. Über diese Schwenkbewegung wiederum wird durch den
Ansatz 77 der Schaltarm 101 den Steuerhebel 99 in eine Position verbringen, die einer Drehrichtung für Rückwärtsfahrt
entspricht und die in Fig. 4b dargestellt ist. Bei dieser
Schwenkbewegung wiederum wird in Folge der Verbindung des
Steuerhebels 99 mit dem Schaltarm 103 die erste Schwenkscheibe im Uhrzeigerdrehsinn verstellt. Da der Schalthebel in
Folge seiner Anordnung an dem dritten Schwenkteil um dieselbe Achse, wie die ersten und zweiten Schwenkteile oder um
eine zu diesen koaxial verlaufende Achse schwenkt, bleibt
der Schaltfinger beim Verdrehen des entsprechenden ersten
oder zweiten Schaltteils immer in den zugehörigen Radialschlitz eingerastet. Hierdurch wiederum können die den
Schenkeln 25 und 27 zugeordneten Schaltgassen entsprechend
lang angeordnet sein, so daß, wenn sich beim Auf- und
Abbewegen des Schalthebels 23 noch Drehzahländerungen des
hydraulischen Getriebes ergeben, sich eine besonderes
feinfühlige Schaltvorrichtung ergibt.

Über das Rückführgestänge läßt sich die Schaltvorrichtung
wieder in ihre Neutralstellung zurückführen, insbesondere
dann, wenn eine Vollbremsung erfolgt. Im einzelnen wird bei
der Betätigung der Bremse der Arm 118 entsprechend verstellt,
der je nach Schwenkstellung des Ansatzes 112 gegen diesen
zur Anlage kommt und dabei den Schalthebel 23 in der Schalt-

0208115

gasse des Schenkels 25 bzw. 27 in Richtung auf den Steg 29 zurückverstellt. Da aber bei dieser Rückstellbewegung der Schaltfinger 97 noch in dem zugehörigen ersten oder zweiten Schwenkteil eingerastet ist, wird dieses auch entsprechend zurückgeführt, so daß die Drehzahl entsprechend verringert bzw. auf Null zurückgestellt wird.

Patentansprüche

1. Schaltvorrichtung für ein hydrostatisches Getriebe, insbesondere für Kraftfahrzeuge, dessen Drehrichtung umkehrbar und das über einen Schalthebel (23) schaltbar ist, der in seiner Neutralstellung um eine erste Achse (91, 93) schwenkbar und beim Verschwenken um die erste Achse (91, 93) wahlweise in eins von zwei den beiden Drehrichtungen zugeordnetes und um eine zweite Achse (37) drehbares Schwenkteil (61, 65) eingreift und der um eine dritte, zur ersten Achse (91, 93) im rechten Winkel und zur zweiten Achse (37) parallel angeordnete Achse schwenkbar ist und beim Verschwenken um die dritte Achse die Schwenkteile (61, 65) verdreht, dadurch gekennzeichnet, daß die zweite und dritte Achse koaxial angeordnet sind.

2. Schaltvorrichtung nach Anspruch 1, dadurch gekennzeichnet, daß die zweite und dritte Achse miteinander verbunden sind.

3. Schaltvorrichtung nach Anspruch 1 oder 2, dadurch gekennzeichnet, daß auf der dritten oder zweiten Achse (37) ein drittes Schwenkteil (41) gelagert ist, an dessen einem Ende die erste Achse (91, 93) angeordnet ist.

4. Schaltvorrichtung nach Anspruch 3, wobei der Schalthebel (23) in einer U-förmigen Schaltschablone (21) geführt ist, dadurch gekennzeichnet, daß der dritte Schwenkteil (41) zur Aufnahme der ersten Achse (91, 93) mindestens ein Lagerauge (85, 87) aufweist, in dem der Schalthebel (23) um die erste Achse (91, 93) verschwenkbar gelagert ist.

**0208115**

5. Schaltvorrichtung nach einem oder mehreren der vorherigen Ansprüche, dadurch gekennzeichnet, daß der Schwenkteil (41) bei Betätigung einer Bremse in seine der
Neutralstellung des Schalthebels (23) entsprechende
Ausgangsstellung über ein Gestänge (116, 118, 120)
rückführbar ist.

6. Schaltvorrichtung nach Anspruch 5, dadurch gekennzeichnet, daß der dritte Schwenkteil (41) mit einem Ansatz
(112) versehen ist, gegen den ein Arm (118) zur Anlage
bringbar ist, der schwenkbar gelagert und über die
Bremse bzw. deren Gestänge betätigbar ist.

7. Schaltvorrichtung nach Anspruch 5, dadurch gekennzeichnet, daß der dritte Schwenkteil (41) mit einer auf der
dritten oder zweiten Achse (37) gelagerten Hülse (43)
verbunden ist, die wiederum an einem vierten Schwenkteil (45) angeschlossen ist, wobei auf der Hülse (43)
zwischen dem dritten und vierten Schwenkteil (41, 45)
der erste und zweite Schwenkteil (61, 65) drehbar
angeordnet sind.

8. Schaltvorrichtung nach Anspruch 7, dadurch gekennzeichnet, daß der dritte und vierte Schwenkteil (41, 45) mit
der Hülse (43) über mindestens einen Stift (47) miteinander verbunden sind.

9. Schaltvorrichtung nach einem oder mehreren der vorherigen Ansprüche, wobei die ersten und zweiten Schwenkteile (61, 65) Nasen (63, 69), in die ein Schaltfinger
(97) des Schalthebels (23) eingreifen kann, und Anschlußstellen für Schaltarme (101, 103) aufweisen, dadurch
gekennzeichnet, daß die Anschlußstellen an je einem
Ansatz (76, 77) vorgesehen sind, die zu den Nasen (63,
69) im rechten oder etwa rechten Winkel angeordnet sind
und sich in entgegengesetzte Richtungen erstrecken.

10. Schaltvorrichtung nach einem oder mehreren der vorherigen Ansprüche, dadurch gekennzeichnet, daß alle Schwenkteile (41, 45, 61, 65) als Scheiben ausgebildet sind.

11. Schaltvorrichtung nach einem oder mehreren der vorherigen Ansprüche, dadurch gekennzeichnet, daß alle Schwenkteile (41, 45, 61, 65) federbelastet sind.

12. Schaltvorrichtung nach einem oder mehreren der vorherigen Ansprüche, dadurch gekennzeichnet, daß die dritte und zweite Achse (37) aus einem in einen gehäusefesten Teil (35) einsetzbaren Zapfen bestehen, der endseitig eine aufschraubbare Mutter (57) aufnimmt, die über eine Feder (53) gegen eine Ausgleichplatte (51) anliegt, wobei zwischen Ausgleichplatte und viertem Schwenkteil (45) und zwischen gehäusefesten Teil (35) und drittem Schwenkteil (41) je ein Drucklager (39, 49) vorgesehen ist.

13. Schaltvorrichtung nach einem oder mehreren der vorherigen Ansprüche, dadurch gekennzeichnet, daß koaxial zur dritten und zweiten Achse (37) in den gehäusefesten Teil (35) ein weiterer Zapfen (130) eingesetzt ist, der einen Betätigungshebel (146) aufnimmt, der federbelastet ist.

14. Schaltvorrichtung nach Anspruch 12 und 13, dadurch gekennzeichnet, daß die Ausgleichsplatte (51) über eine Ausgleichschraube (150) mit einer weiteren Ausgleichsplatte (138) verbunden ist, die auf dem weiteren Zapfen (130) angeordnet ist, wobei zwischen der weiteren Ausgleichplatte (138) und dem Betätigungshebel (146) und zwischen dem gehäusefesten Teil (35) und dem Betätigungshebel (146) je ein Drucklager (132, 136) vorgesehen ist und auf das freie Ende des weiteren Zapfens (130) eine Mutter (144) aufschraubbar ist, die über eine Feder (140) gegen die weitere Ausgleichplatte (138) drückt.

**FIG. I** 1/4

FIG. 3

**FIG. 4a**

**FIG. 4b**

0208115

4/4

FIG. 2

FIG. 5

# EUROPÄISCHER RECHERCHENBERICHT

**Europäisches Patentamt**

**0208115**
Nummer der Anmeldung

**EP 86 10 7217**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 519 365 (VICKERS) <br> * Seite 2; Figur * | 1,2 | F 16 H 39/46 <br> B 60 K 41/26 |
| Y | US-A-1 845 332 (REECE) <br> * Seite 5; Figur 3 * | 1 | |
| A | | 2 | |
| Y,D | US-A-4 346 618 (SAKAMOTO) <br> * Spalten 1-3; Figur * | 1,4 | |
| A | FR-A-1 535 116 (BOSCH) <br> * Seite 2; Figur * | 1,5 | |
| A | US-A-3 710 904 (BOYER) | | |
| A | US-A-4 085 833 (STAMOS) | | |

**RECHERCHIERTE SACHGEBIETE (Int. Cl.4)**

F 16 H 39/00
B 60 K 41/00

Der vorliegende Recherchenbericht wurde für alle Patentansprüche erstellt.

| Recherchenort | Abschlußdatum der Recherche | Prüfer |
|---|---|---|
| DEN HAAG | 12-09-1986 | FLORES E. |